# DEMANDE DE BREVET EUROPEEN

(11) **EP 0 802 641 A1**
(43) Date de publication de la demande: **22.10.1997**
(21) Numéro de dépôt: 97400789.0
(22) Date de dépôt: 07.04.1997
(51) Int. Cl.: H04B 10/17, H01S 3/06

(54) **Montage à deux amplificateurs optiques, notamment pour répéteur d'un système de télécommunications par voie sous-marine**

(30) Priorité: 18.04.1996 FR 9604869
(71) Demandeur: Alcatel Submarine Networks, 92110 Clichy (FR)
(72) Inventeur: Bourret, Gérard, 91620 La Ville du Bois (FR); Gherardi, Bernard, 91090 Lisses (FR)
(74) Mandataire: Sciaux, Edmond

(57) **Abrégé**

Dispositif à deux amplificateurs optiques (13, 14) dont chacun comprend une source de pompage (35, 36), un milieu actif (15, 15₁) tel qu'une fibre optique, et un moyen pour récupérer l'énergie de pompage non utilisée dans le milieu actif afin de la réinjecter dans l'autre amplificateur (14, 13).

Le moyen de récupération (20, 20₁, 30, 31) est tel que, dans chaque amplificateur, la réinjection s'effectue en sens contraire du sens d'injection de l'énergie principale de la pompe. Chaque amplificateur comporte, par exemple, une borne (22, 22₁) de récupération qui constitue à la fois une sortie pour l'énergie de pompage non utilisée et une entrée pour la réinjection de l'énergie de pompage récupérée dans l'autre amplificateur. Un simple conducteur (30) effectue une liaison optique entre les bornes (22, 22₁) de récupération des deux amplificateurs (13, 14).

Le dispositif est utilisable dans un répéteur pour transmission de signaux optiques à distance, notamment par voie sous-marine.

## Description

L'invention est relative à un montage à deux amplificateurs optiques, notamment pour des répéteurs de signaux dans un système de télécommunications à conducteurs optiques.

La transmission de signaux par conducteurs optiques est souvent utilisée pour les grandes distances, en particulier pour transmettre des signaux téléphoniques ou des données numériques par voie sous-marine.

Ce type de transmission est relativement insensible aux bruits et affaiblit peu les signaux.

Toutefois, l'affaiblissement n'est pas nul. C'est pourquoi dans un système de transmission, on prévoit, de place en place, des répéteurs destinés à amplifier les signaux optiques. Chaque répéteur comporte, le plus souvent, un couple d'amplificateurs optiques dont l'un amplifie le signal dans le sens "aller" et l'autre dans le sens "retour".

Les fibres optiques les plus couramment utilisées pour la transmission sont des fibres en silice, par exemple dopées au germanium, dont le coefficient de transmission est optimum pour une longueur d'onde d'environ 1550 nanomètres (nm). Dans de tels systèmes de transmission, on prévoit des amplificateurs optiques qui comprennent, d'une part, en tant que milieu actif, une fibre dopée à l'erbium, et d'autre part, un laser de pompage (ou "pompe") émettant à une longueur d'onde de 1475 nm.

La pompe est destinée à exciter les électrons de la fibre et c'est le retour à l'état désexcité, sous l'effet d'un signal lumineux, qui produit l'effet désiré d'amplification optique de ce signal lumineux.

Le niveau de sortie de l'amplificateur est d'autant plus grand que la puissance de la pompe est élevée. Pour une transmission optique, on a intérêt à maximiser la puissance de la pompe afin de réduire le nombre de répéteurs sur la ligne.

Pour augmenter le niveau de sortie d'un couple d'amplificateurs optiques, on a déjà proposé (demande de brevet japonais 4-023528) d'injecter dans un amplificateur l'énergie de la pompe non utilisée dans l'autre amplificateur, cette énergie récupérée s'ajoutant à celle de la pompe associée à l'amplificateur bénéficiant de cette injection. En effet, habituellement environ 20% de l'énergie de la pompe n'est pas utilisée par le milieu actif, c'est-à-dire pour exciter les électrons. Cette énergie lumineuse non utilisée est transmise par la fibre de l'amplificateur et se retrouve à la sortie de ce dernier. C'est cette énergie récupérée à la sortie d'un amplificateur qui est utilisée pour augmenter la puissance de pompage de l'autre amplificateur.

La récupération d'énergie augmente donc d'environ 20% la puissance de pompage pour chaque amplificateur, ce qui augmente d'environ 20 à 25% le niveau de sortie de chaque amplificateur.

Dans le montage connu, l'énergie récupérée à la sortie d'un amplificateur est injectée dans l'autre amplificateur, dans le même sens que l'énergie lumineuse de la pompe principale de cet autre amplificateur. Une même entrée de chaque amplificateur reçoit, d'une part, le signal principal de pompe et, d'autre part, l'énergie de pompe récupérée.

On prévoit donc, dans le montage connu, pour chaque amplificateur, un composant analogue à un additionneur présentant une entrée pour la pompe, une entrée pour l'énergie récupérée et une sortie reliée à l'entrée de pompage de l'amplificateur.

L'invention vise à simplifier ce montage et, notamment, à en réduire le nombre de composants, de façon à augmenter la fiabilité.

Pour des répéteurs de liaison sous-marine, la fiabilité est une qualité indispensable car ces organes sont pratiquement inaccessibles et plus la structure est simple, et le nombre de composants réduit, plus la fiabilité est grande.

L'invention est caractérisée en ce que l'énergie de pompe récupérée à la sortie d'un amplificateur est réinjectée dans l'autre amplificateur en sens contraire du sens d'injection de l'énergie principale de la pompe de cet autre amplificateur.

Dans le mode de réalisation préféré, chaque amplificateur présente une borne de récupération qui a une double fonction : d'une part, la sortie de l'énergie de pompe récupérée et, d'autre part, l'entrée pour l'injection de l'énergie de pompe récupérée de l'autre amplificateur.

Dans ces conditions, une liaison unique est prévue entre les bornes de récupération des deux amplificateurs, ce qui aboutit à un montage particulièrement simple. De préférence, dans cette liaison, on prévoit un filtre passe-bande bidirectionnel, dont la caractéristique est centrée sur la longueur d'onde de pompage.

Quel que soit son mode de réalisation, l'invention présente l'avantage d'optimiser la puissance et de minimiser le bruit apporté au signal par le pompage. L'optimisation de la puissance est due à la récupération d'énergie ; la minimisation du bruit est la conséquence du pompage mixte, c'est-à-dire à la fois "codirectionnel" et "contradirectionnel" dans les amplificateurs. Par pompage "codirectionnel" on entend une injection d'énergie de pompage qui s'effectue dans le même sens que celui du signal optique utile. Par pompage "contradirectionnel", on entend une injection d'énergie de pompage qui s'effectue dans le sens inverse de propagation du signal utile.

D'autres caractéristiques et avantages de l'invention apparaîtront avec la description de certains de ses modes de réalisation, celle-ci étant effectuée en se référant aux dessins ci-annexés, sur lesquels :
la figure 1 est un schéma d'un répéteur selon l'invention,
la figure 2 est un schéma expliquant le fonctionnement d'un multiplexeur faisant partie du répéteur de la figure 1, et
la figure 3 est un diagramme montrant la courbe de gain d'un amplificateur du répéteur de la figure 1.

L'exemple que l'on va décrire en relation avec les figures, est un répéteur destiné à une installation de transmission de signaux téléphoniques ou de données numériques par voie sous-marine.

La transmission s'effectue dans les deux sens. On prévoit donc, d'une part, un conducteur optique 11 dans le sens de l'aller et un conducteur optique 12 dans le sens du retour.

Pour chaque sens, le répéteur comporte un amplificateur optique. Ainsi, l'amplificateur 13 est prévu pour amplifier le signal dans le sens aller et l'amplificateur 14 pour amplifier le signal dans le sens du retour.

Les deux amplificateurs optiques 13 et 14 ont des structures identiques. On se contentera de décrire l'un de ceux-ci, à savoir celui de référence 13 dans le sens de l'aller.

Le milieu actif de l'amplificateur 13 est constitué par une fibre optique 15 en silice dopée à l'erbium. Le conducteur optique 11 et la fibre 15 transmettent des longueurs d'ondes comprises entre 1530 et 1580 nm environ. L'amplificateur optique 13 présente un maximum de gain pour la longueur d'onde de 1558 nm.

En amont de la fibre 15, l'amplificateur 13 comporte un multiplexeur 16 présentant une entrée 17 pour le signal optique à transmettre et une entrée 18 pour recevoir une énergie de pompage provenant d'un ou plusieurs lasers de longueur d'onde égale à 1475 nm.

A l'aval de la fibre 15, l'amplificateur 13 comporte un multiplexeur/démultiplexeur 20 présentant deux sorties, à savoir : une sortie 21 pour le signal optique amplifié, ayant une longueur d'onde égale à, ou proche de, 1558 nm, et une sortie 22 pour la longueur d'onde de pompage, c'est-à-dire 1475 nm.

A l'aval de la sortie 21, sur le conducteur 11, on prévoit en outre un isolateur 23.

Les composants de l'amplificateur optique 14, dans le sens du retour, qui correspondent à ceux de l'amplificateur 13 ont été affectés du même chiffre de référence, mais avec l'indice 1.

Chacune des bornes 22 et 22₁ a une double fonction : d'une part, elle constitue une sortie pour le signal à longueur d'onde de 1475 nm et, d'autre part, comme on le verra plus loin, elle constitue une entrée pour un signal optique à même longueur d'onde, récupéré de l'autre amplificateur optique.

Selon un aspect important de l'invention, les bornes 22 et 22₁ sont reliées l'une à l'autre par une connexion optique 30 comportant un filtre passe-bande optique 31 centré sur la longueur d'onde de pompage de 1475 nm. Le diagramme apparaissant à côté du filtre bidirectionnel 31 représente la courbe de transmission 32 de ce filtre en fonction de la longueur d'onde. La largeur de la bande passante 31 de ce filtre est d'environ 20 nm. Ce filtre est constitué, dans l'exemple, par une lame interférentielle.

Le pompage optique est réalisé à l'aide de deux pompes 35 et 36 qui sont des lasers émettant chacun à la longueur d'onde de 1475 nm.

La sortie de la pompe 35 est reliée à la première entrée 37₁ d'un coupleur 37 par l'intermédiaire d'un isolateur 38.

De même, la sortie de la pompe 36 est reliée à la seconde entrée 37₂ du coupleur 37 par l'intermédiaire d'un autre isolateur 39.

Le coupleur 37 présente deux sorties 37₃ et 37₄. La sortie 37₃ est reliée à l'entrée 18 du multiplexeur 16 de l'amplificateur 13. La sortie 37₄ du coupleur 37 est connectée à l'entrée 18₁ du multiplexeur 16₁ de l'amplificateur optique 14.

Le coupleur 37 est du type 40/60, c'est-à-dire que sur la sortie 37₃ apparaît un signal dont la puissance est 60% de la puissance de la pompe 35 et 40% de la puissance de la pompe 36. Réciproquement, sur la sortie 37₄, apparaît un signal de pompage de puissance égale à la somme de 40% de la puissance P₁ de la pompe 35 et 60% de la puissance P₂ de la pompe 36.

La pompe 35 comporte une entrée de régulation 35₁ recevant un signal optique correspondant à la puissance de sortie de l'amplificateur 13. A cet effet, on prévoit, à l'aval de l'isolateur 23, un coupleur 40 de prélèvement qui transmet environ 4% de l'énergie de sortie de l'isolateur 23 vers l'entrée 35₁.

De même, la pompe 36 présente une entrée 36₁ de régulation recevant un signal optique représentant le signal sur la sortie de l'amplificateur 14. A cet effet, un autre coupleur 40₁ est à l'aval de l'isolateur 23₁.

Grâce aux signaux sur les entrées 35₁ et 36₁ des pompes, respectivement 35 et 36, le signal de sortie sur chaque amplificateur peut être maintenu constant. Ce type de régulation est classique, il n'est pas utile de l'expliquer plus en détail ici.

Les multiplexeurs/démultiplexeurs 20 et 20₁ comprennent, dans l'exemple, une lame interférentielle 45. De façon en soi connue, cette lame est constituée par une plaque de verre sur laquelle est déposée une ou plusieurs couches permettant d'isoler des longueurs d'ondes choisies.

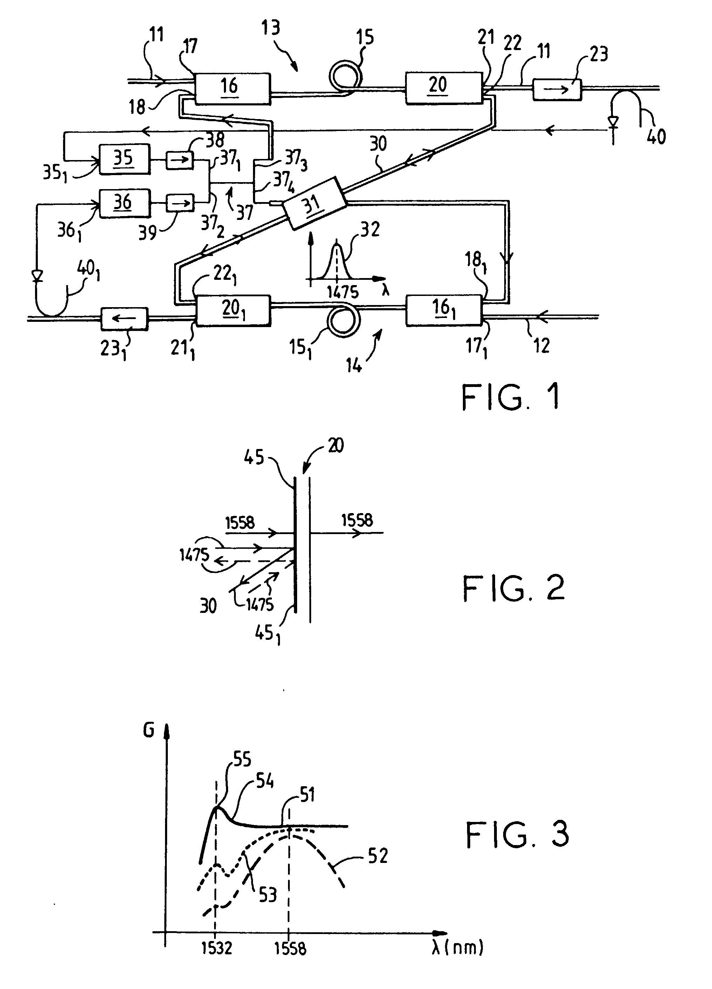

Sur la figure 2, le signal optique transmis est représenté par une flèche à côté de laquelle on a indiqué la longueur d'onde de 1558 nm. De même, le signal de pompage (récupéré ou entrant) est représenté par une flèche à côté de laquelle on a indiqué la longueur d'onde de 1475 nm.

On voit, sur cette figure 2, que la lame 45 transmet le signal utile 1558 de la gauche vers la droite. Le signal de pompage non dissipé dans la fibre 15 (figure 1) arrive sur la face gauche 45₁ de la lame 45 d'où elle est renvoyée vers le conducteur 30. De même, le signal de pompage récupéré sur la sortie 22₁ du démultiplexeur 20₁ est amené, par le conducteur optique 30, sur la face 45₁ pour retourner, de la droite vers la gauche, vers la fibre 15.

Dans son ensemble, en ce qui concerne le pompage, le répéteur fonctionne de la façon suivante :

Environ 80% de l'énergie du faisceau laser appliquée sur l'entrée 18 est utilisée pour exciter les électrons dans la fibre 15, les 20% restant étant transmis par cette même fibre et récupérés sur la sortie 22. La sortie 22 applique sur l'entrée 22₁ du multiplexeur 20₁, un signal de pompage qui est utilisé de façon contradirectionnelle dans l'amplificateur 14.

De même, le signal de pompage récupéré sur la borne 22₁ dans l'amplificateur 14 (signal non utilisé dans cet amplificateur 14) est appliqué sur la borne 22 de l'amplificateur 13 pour effectuer un pompage contradirectionnel dans ce même amplificateur.

Ainsi, chaque amplificateur optique reçoit de l'énergie de pompage codirectionnelle par l'entrée 18 ou 18₁ et de l'énergie de pompage contradirectionnelle par l'entrée 22 ou 22₁. Cet apport d'énergie de pompage dans les deux sens est favorable à la diminution du bruit apporté par le pompage sur le signal utile transmettant l'information. En effet, le bruit est d'autant plus faible que l'énergie de pompage est mieux distribuée le long d'une fibre dopée et la combinaison d'un pompage contradirectionnel à un pompage codirectionnel améliore cette distribution d'énergie de pompage.

L'augmentation de puissance de la pompe qui est obtenue par la récupération d'énergie grâce au montage des répéteurs avec la liaison 30, entraîne, pour chaque amplificateur, une courbe de gain en fonction de la longueur d'onde présentant un plateau prononcé 51 (figure 3) pour une gamme de longueurs d'ondes d'environ 20 nm. Ce plateau 51 est avantageux pour une installation dans laquelle plusieurs longueurs d'ondes sont transmises par les conducteurs optiques.

La figure 3 est un diagramme sur lequel on a porté, en abscisses, la longueur d'onde λ exprimée en nanomètres et, en ordonnées, le gain G. La courbe 52 correspond à une puissance totale de pompe de l'ordre de 30 mW. La courbe 53 correspond à une puissance de pompe de l'ordre de 60 mW et la courbe 54 présentant le plateau 51 correspond à la puissance totale de pompe de 80 mW.

Avec une puissance de pompe relativement importante on obtient un pic de gain 55 à la longueur d'onde de 1532 nm. Ce pic est éliminé par un filtre (non représenté).

Le montage que l'on vient de décrire en relation avec les figures est d'une grande simplicité, ce qui est favorable à la fiabilité, une caractéristique essentielle pour les répéteurs sous-marins.

Les pompes 35 et 36 émettent des signaux non polarisés.

Dans une variante, à la place d'un coupleur ou démultiplexeur à lame interférentielle, on prévoit un coupleur du type à fusion-étirage.

Dans les modes de réalisation décrits, les amplificateurs optiques 13 et 14 transmettent des signaux en sens contraires. L'invention n'est pas limitée à cette disposition. En variante, les signaux sont transmis dans le même sens.

De même, l'invention n'est pas limitée au fait que le pompage principal est codirectionnel et le pompage réinjecté est contradirectionnel. Il est également possible de prévoir la réalisation inverse, à savoir le pompage principal contradirectionnel et le pompage réinjecté codirectionnel.

De façon générale, l'invention se rapporte à un dispositif à deux amplificateurs optiques dont chacun comprend une source de pompage, un milieu actif tel qu'une fibre et un moyen pour récupérer l'énergie de pompage non utilisée dans le milieu actif afin de la réinjecter dans l'autre amplificateur, ce dispositif étant caractérisé en ce que le moyen de récupération est tel que la réinjection s'effectue en sens contraire du sens d'injection de l'énergie principale de la pompe.

## Revendications

1. Dispositif à deux amplificateurs optiques (13, 14) dont chacun comprend une source de pompage (35, 36), un milieu actif (15, 15₁) tel qu'une fibre optique, et un moyen pour récupérer l'énergie de pompage non utilisée dans le milieu actif afin de la réinjecter dans l'autre amplificateur (14, 13), caractérisé en ce que le moyen de récupération (20, 20₁, 30, 31) est tel que, dans chaque amplificateur, la réinjection s'effectue en sens contraire du sens d'injection de l'énergie principale de la pompe.

2. Dispositif selon la revendication 1, caractérisé en ce, que dans chaque amplificateur optique (13, 14), le signal principal de pompage a le même sens que le signal optique à amplifier.

3. Dispositif selon la revendication 1 ou 2, caractérisé en ce qu'un amplificateur optique (13) transmet un signal optique dans un sens et l'autre amplificateur optique (14) transmet un signal optique dans l'autre sens.

4. Dispositif selon l'une quelconque des revendications à 1 à 3, caractérisé en ce que chaque amplificateur comporte une borne (22, 22₁) de récupération qui constitue à la fois une sortie pour l'énergie de pompage non utilisée et une entrée pour la réinjection de l'énergie de pompage récupérée dans l'autre amplificateur.

5. Dispositif selon la revendication 4, caractérisé en ce qu'il comporte un conducteur (30) effectuant une liaison optique entre les bornes (22, 22₁) de récupération des deux amplificateurs (13, 14).

6. Dispositif selon la revendication 5, caractérisé en ce qu'il comporte un filtre passe-bande (31), centré sur la longueur d'onde de pompage, dans la liaison entre les bornes de récupération des deux amplificateurs.

7. Dispositif selon l'une quelconque des revendications précédentes, caractérisé en ce que le moyen de récupération comporte une lame interférentielle (45) pour séparer la longueur d'onde de pompage de la longueur d'onde du signal à amplifier.

8. Dispositif selon l'une quelconque des revendications précédentes, caractérisé en ce que le milieu actif (15, 15₁) de chaque amplificateur (13, 14) comporte une fibre dopée à l'erbium.

9. Dispositif selon l'une quelconque des revendications précédentes, caractérisé en ce que chaque source de pompage (35, 36) est régulée de façon telle que chaque amplificateur délivre une puissance constante.

10. Dispositif selon l'une quelconque des revendications précédentes, caractérisé en ce qu'il comporte deux sources de pompage (35, 36) connectées à un coupleur (37) présentant deux sorties (37₃, 37₄), une pour chaque amplificateur, chacune de ces sorties délivrant une énergie de pompage qui est fonction de l'énergie fournie par les deux sources (35, 36).

11. Application du dispositif selon l'une quelconque des revendications précédentes à un répéteur pour transmission de signaux optiques à distance, notamment par voie sous-marine.
